# EUROPEAN PATENT SPECIFICATION

(11) **EP 2 651 218 B1**
(45) Date of publication and mention of the grant of the patent: **15.02.2017**
(21) Application number: 11791595.9
(22) Date of filing: 09.12.2011
(51) Int. Cl.: A01N 53/00, A01P 7/04, A01N 25/30

(54) **ADJUVANTS FOR INSECTICIDES**
ADJUVANZIEN FÜR INSEKTIZIDE
ADJUVANTS POUR INSECTICIDES

(30) Priority: 13.12.2010 US 422352 P; 09.03.2011 EP 11157420
(43) Date of publication of application: 23.10.2013
(73) Proprietor: Akzo Nobel Chemicals International B.V., 6824 BM Arnhem (NL)
(72) Inventor: HAZEN, James, Lyle, Young Harris Georgia 30582 (US); SUN, Jinxia, Susan, Hopewell Junction New York 12533 (US)
(74) Representative: Akzo Nobel IP Department
(86) International application number: PCT/EP2011/072263
(87) International publication number: WO 2012/080099

(56) References cited:
- EP-A1- 0 257 686
- WO-A1-2009/118025
- WO-A1-2009/118027
- US-A1- 2009 170 704
- US-A1- 2009 306 147
- US-A1- 2010 099 717
- US-B1- 6 506 795

## Description

### Field of the Invention

The invention relates to additives enhancing the activity of certain insecticides, to significantly increase the effect of such insecticides when applied to the exterior foliage of a plant, thus increasing the kill rate of feeding insects that are normally protected deep within other tissue structures of the plant.

### Background of the Invention

The adjuvant industry have until now been focused on the enhancement of herbicidal activity. For example, in U.S. Patent No. 5,226,943 certain adjuvants were disclosed for use with herbicides. Such adjuvants have the ability to cause changes in the plant protective tissues, leading to increased potential for exogenous materials to enter the plant tissues and to be subsequently translocated within the apoplastic and/or symplastic systems. Such penetration and movement of exogenous chemicals within a plant creates a heightened potential for those chemicals to be carried by the normal plant life processes to areas of the plant which may be most directly influenced by those chemicals. Thus, this enhanced diffusion of exogenous chemicals is valuable to permit the effect of such exogenous chemicals in plant tissues distant from the point of their initial extreme contact.

In the field of application insecticides, there is still a similar, growing need for additives which significantly improve the effectiveness of the insecticides. The present inventors have surprisingly found that certain classes of surfactants, when co-applied with certain insecticides, can significantly increase the effectiveness of the insecticide when applied to exterior foliage of a plant, thus increasing the kill rate of feeding insects that are normally protected deep within other tissue structures, such as the stems or roots of same.

### Summary of the Invention

The invention relates to additives enhancing the activity of certain insecticides, to significantly increase the effect of such insecticides when applied to the exterior foliage of a plant, thus increasing the kill rate of feeding insects that are normally protected deep within other tissue structures of the plant. This will improve the quality and yield of many agricultural crops as the infection rate and tissue damage caused by insects can be more economically and effectively reduced. The invention is also directed to a process for controlling insect populations by applying to an insect habitat at least one surfactant hereinafter described. The invention is further directed to a process for controlling insect populations by applying to an insect habitat a synergistic insecticide composition as defined above.

### Detailed Description of the Invention

As a result of extensive research and development it has now been found that these desired properties of insecticides compositions can be acquired by adding one or more surfactants to said compositions. The surfactants are derivatives obtained by reacting fatty amines, fatty amido amines or fatty imidazolines with ethylene oxide and propylene oxide or butylene oxide in separate steps (formation of block polymer) or with random mixtures of ethylene oxide and propylene oxide and/or butylene oxide (copolymer).

Insecticides that can be utilized in the context of the present invention include, but are not limited to, chlorfenapyr, pyrethrum and piperonyl butoxide, and mixtures or combinations of one or more thereof. The addition of such surfactants to these insecticide compositions synergistically improves the effectiveness thereof against a wide range of insects. It has moreover been found that optimum results may be obtained with the final insecticide compositions
a) the minimum molar ratio between ethylene oxide and propylene oxide or butylene oxide are approximately 13:2;
b) the maximum molar ratio between ethylene oxide and propylene oxide or butylene oxide are approximately 1:14;
c) the total molecular weight of the reaction product is 2500 or lower.

The term fatty amines or fatty amido amines/imidazolines as used hereinbefore or hereinafter refers to compounds containing at least one higher C8-22 alkyl radical linked to one or more nitrogen atoms.

The fatty amines or fatty amido amines/imidazolines to be alkoxylated and used in the compositions of this invention are selected from the group consisting of

R-NH₂ ,

RR'NH,

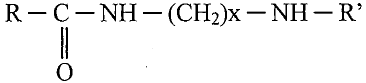

and 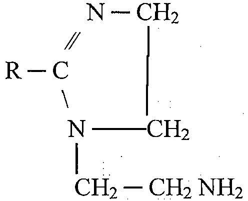 wherein R is an aliphatic hydrocarbon group having 8-22 carbon atoms, R' is hydrogen or an alkyl group having 2-4 carbon atoms and x is an integer from 1 to 6.

According to one embodiment of the present invention, use is made in the final compositions of compounds of the following structural formulae: 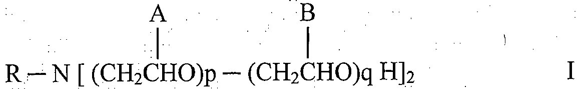 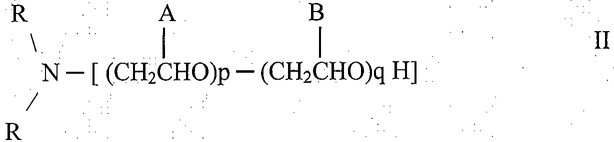 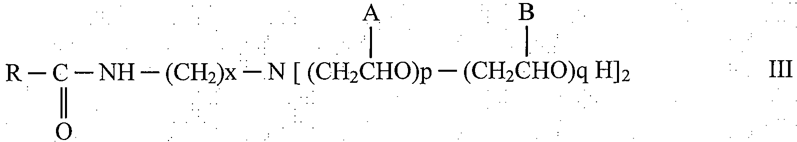 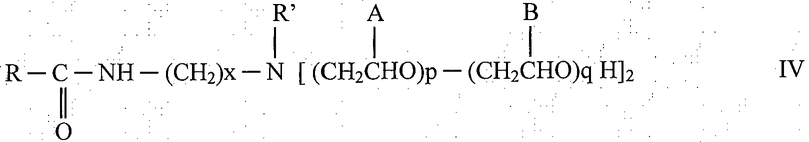 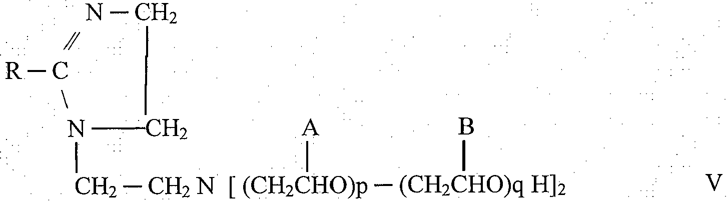 wherein one of A and B is hydrogen and the other is selected from the group consisting of methyl and ethyl, and p and q are integers having a sum of 2-50.

It has been established by experiments that products having a molecular weight higher than about 2500 do dissolve the wax film, but do not or hardly penetrate the underlying cell membranes because the molecules are too large. The additives of the invention very rapidly dissolve and penetrate the wax film on the plant leaf surface and that after they have passed through the wax film, the underlying cell membranes are penetrated, and the resulting cell leakage will permit the insecticides to enter the cells by this pathway.

The concentration of the additive according to the invention should be effective to improve the uptake of the accompanied insecticide. A too high dosage may give rise to a too fast passage through the outer wax film and the resulting too high concentration underneath the wax film will lead to destruction (strong cell wall lesion and penetration) of the cell membranes, which just leads to blockade of the insecticides. At the proper Concentration, the uptake of the surfactant additives and accompanied insecticide is found to be much improved compared to compositions not containing the surfactant additives of the invention

In one embodiment, concerning combinations of additives and insecticide, the additive should be used in a concentration in the range of from 0.01- 1% by volume, in another embodiment 0.05-0.25% by volume.

Use of the present additives appears to lead to a correct and optimum balance between hydrophilic and lypophilic properties and they aid the uptake through the leaf of insecticide dissolved in water or emulsified therein. These additives constitute an attractive means of combining maximum dissolution of the wax film, penetration of underlying cell membranes and transport via the hydrophilic and the lypophilic phase, provided that the additives are used in a proper concentration.

The additives of the invention also permit satisfactory penetration both in monocotyledons and dicotyledons. Additives that have been traditionally used up to now for herbicides, for example, are based on ethoxylated fatty amines, and while they readily pass through wax films on dicotyledons, they will far less readily penetrate wax like surface films on monocotyledons.

The additives also offer an essential improvement in connection with the relative humidity at which the insecticide compositions are used. It has been found that unlike the ethoxylated fatty amines the present additives display a satisfactory passage through the plant leaf surface at high (over 65%) and low (20-40%) relative humidity. The ethoxylated fatty amines only showed satisfactory results at high relative humidity.

In one embodiment, he additives according to the invention are those of the formulae I and II, wherein the molar ratio between ethylene oxide and propylene oxide or butylene oxide is between 50:50 and 20:80. Within these limits the proper lypophilic-hydrophilic balance is found for this type of compounds.

Dispersion of these products in water results in the formation of visible, stable, oily suspensions.

In another embodiment, additives consisting of ethoxylated and propoxylated tallowamines are utilized. Such additives are for instance presented by compounds of the formula 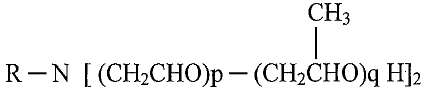 wherein R is the hydrocarbon group of tallow amine, p is 2-3 and q is 4-6, and 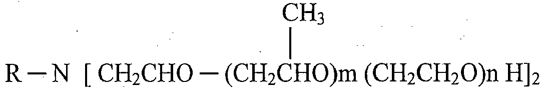 wherein R is the hydrocarbon group of tallow amine, m is 2-3 and n is 2-6.

Co-application may be effected via adding the additives to the spray tank with the insecticide product immediately prior to application, or by formulating an effective amount of the instant additives into the insecticide product, or conceivably, by a combination of both processes.

The amount of additive needed to attain the desired insecticide efficacy enhancement effect will vary with the type of target plant, the age or developmental growth stage of the target plant, the relative health of the plant, photosynthetic rates and the like, as well as the nature of the insecticide chemistry, formulation type and components, application method and application rates, to mention a few. Typically, from 0.1 to 1.0% by volume of adjuvant in water-based conventional spray applications is found effective. Blended compositions are useful in concentrations of from about 0.1 to 5% in water-based, conventional spray applications. Lesser amounts of adjuvant may be effective for improving the efficacy of insecticides applied to target surfaces for contact availability and dose transfer.

Ready to use insecticide compositions typically contain one or more of the additives according to the invention in a concentration of 0.01-1% by volume, in another embodiment from 0.01-0.5% by volume. Such compositions may also be concentrated compositions which are mixed and/or diluted in situ for use at the proper concentration. Moreover, the invention relates to the in situ application of the present compositions to plants.

The invention will be further described by the following non-limiting examples.

### Example 1

### European corn borer

European corn borer is a serious pest in corn field. The number of borers per plant could be within a range of 1 to 6. The yield loss caused by this insect ranges from 2 to 10% per borer per plant. Spraying insecticide to the corn field is one way to control corn borers. The objective for this project is to investigate the effect of Adsee AB 650, Adsee AB 600 and Adsee CE 24/19 on one insecticide "Pounce" in controlling corn borers.

### Life cycle

The European corn borer usually goes through two generations a year in major corn growing areas in US. European corn borer larvae feed on all above ground tissues of the corn plant. They also bore into, feed, and tunnel within the tassel ear, ear shank and stalk, forming cavities. Cavities produced by borers interfere with the translocation of water and nutrients. Cavities also reduce the strength of the stalk and ear shank, thereby prompting the corn plants to stalk breakage and ear drop, which is aggravated by high winds or other adverse environmental conditions.

### Yield losses

Yield losses due to damage by the larvae are primarily due to reduced ear and kernel size (physiological losses) as well as broken plants and dropped ears (potential harvest loss). Larvae feeding in the ear may cause seed yield loss and/or reduce quality in seed corn, popcorn, and fresh market sweet corn. Within a range of 1 to 6 borers per plant, the relationship between the average number of larvae and yield appears to be linear and likely ranges from about 2 to 10% yield loss per borer per plant.

There are several ways to manage the damage of corn borers: choosing resistant corn varieties, using cultural management, planting engineered BT hybrid corn and applying pesticides like BT, Pounce etc.

### Pounce

Pounce is a product from FMC and its common name is Permethrin. Permethrin is a pyrethroid which is a synthetic chemical similar to the natural insecticide pyrethrum, which comes from the chrysanthemum plant, but it remains effective for longer periods of time. Pyrethroids are one of the oldest classes of organic insecticides known. They work by quickly paralyzing the nervous systems of insects. Permethrin is a broad spectrum insecticide, which is registered with the US EPA and first marketed in 1977. Permethrin acts as a stomach poison when it is ingested by insects or as a contact poison through direct contact with target pests. It kills adults, eggs, and larvae, and has a slight repellent effect against insects. The insecticidal activity of this material lasts up to 12 weeks after application.

Permethrin is used against a number of pests, on nut, fruit, vegetable, cotton, corn, ornamental, mushroom, potato and cereal crops. Permethrin is available in dusts, emulsifiable concentrates, smokes, ULV (ultra low volume), and wettable powder formulations.

The experiment investigates the effect of several surfactants of the invention on Pounce efficacy in controlling corn borers. The following surfactants were tested on Pounce efficacy:
Adsee AB 600 - an alkoxylated Tallow amine ethoxylate. (Tallowamine + 2EO + 12PO + 5EO)
Adsee AB 650 - a surfactant blend containing AB 600 and ethoxylated sorbitan monolaurate (Agnique SML-U, Tween 20).
Adsee CE 24/19 - is an alkyl ether citrate based on C12.

Commercial Pounce formulation from FMC(38.4% EC) were applied to a corn crop at 4 oz per acre and with the above surfactants at two concentrations: 0.25% and 0.125% (v/v).
Spray volume: 20 GPA, Random design with three replicates
   ∘ Treatment area: 10 ft X 20 ft
   ∘ Insecticide application rate: 4 oz/A
   ∘ Application time:
      - First treatment: 07/09
      - Second treatment: 07/22
   ∘ Rating: (about 11 WAT)
   ∘ Evaluated both interior and exterior of crop species.

**Treatments**

| # | **Treatment Name** | **Surfactant** |
|---|---|---|
| 1 | Untreated | none |
| 2 | Pounce | none |
| 3 | Pounce+1996-80-1 | Adsee AB 650 (0.25%) |
| 4 | Pounce+1996-80-1 | Adsee AB 650(0.125%) |
| 5 | Pounce+1996-80-2 | Adsee AB 600 (0.25%) |
| 6 | Pounce+1996-80-2 | Adsee AB 600 (0.125%) |
| 7 | Pounce+1996-80-3 | Adsee CE 24/19 (0.25%) |
| 8 | Pounce+1996-80-3 | Adsee CE 24/19 (0.125%) |

Data were collected 11 weeks after second treatment. The data labeled stalk exterior observation were the percentage of damage to the corn plant as seen visually for the entire plot area. This is determined by the amount of stalk breakage above the ear of corn. The data labeled stalk interior observation were the amount of damage to the corn stalk. Ten plants were randomly selected and examined per plot by cutting the stalk lengthwise above the ear and observing for borer damage inside the stalk of corn. Basically, it was to confirm that the damage was caused by corn borer rather than any other reasons. In both sets of data, the high number indicates poor control and the lower numbers indicates good control.

### Results and Discussion

### Exterior observation

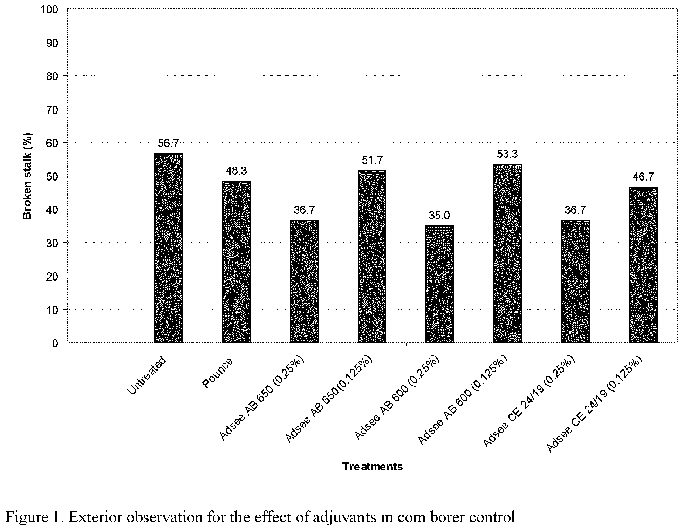

About 57% of the corn was infested with corn borer without any treatments. Pounce alone reduced the infestation level to 48%. There was a significantly drop when Pounce combined with any of the adjuvants tested at 0.25% (details in figure 1).

### Interior observation

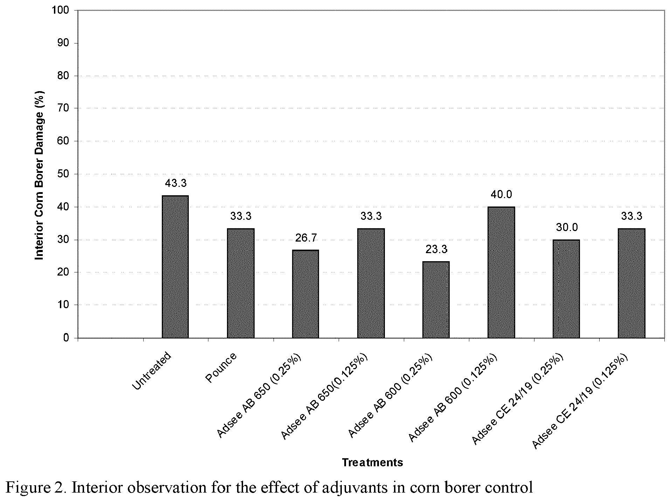

Similar to the exterior observation, the interior data showed that the adjuvants tested at higher concentration significantly improved the insecticide efficacy. However, both Adsee AB 650 and Adsee AB 600 at 0.25% exhibited more consistent performance. The corn borer infestation level dropped below 30% when the insecticide was combined with the either of the two adjuvants at 0.25% (details in figure 2) in the field.

Overall, the efficacy of Pounce in controlling corn borer was significantly improved when combined with adjuvants at higher concentration (0.25% rather than 0.125%).

## Claims

1. A insecticide composition comprising at least one insecticidally active ingredient selected from the group consisting of chlorfenapyr, pyrethrins and the synthetic pyrethroids, piperonyl butoxide and any mixture of two or more thereof, and one or more alkoxylated fatty amines of the formulae: 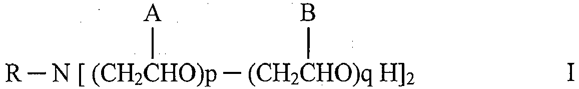 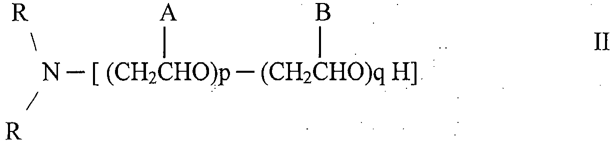 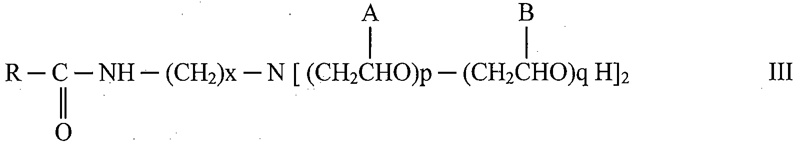 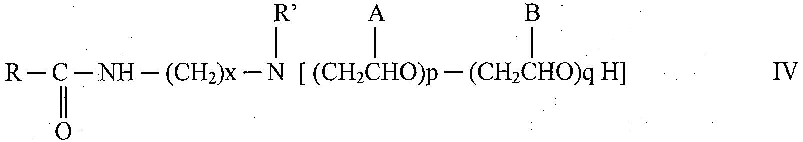 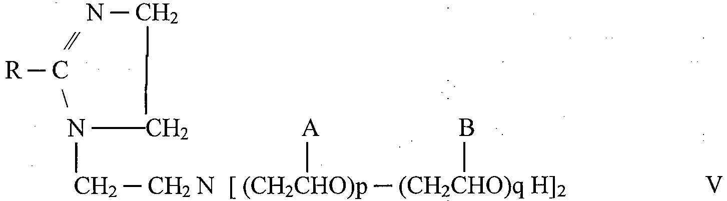 wherein R is an aliphatic hydrocarbon group having 8-22 carbon atoms, R' is hydrogen or an alkyl group having 2-4 carbon atoms, x is an integer from 1 to 6, one of A and B is hydrogen and the other is selected from the group consisting of methyl and ethyl, and wherein the ethylene oxide and propylene oxide groups are random or in blocks, and p and q are integers having a sum of 2-50.

2. A composition according to claim 1, comprising an alkoxylated fatty amine having the formula 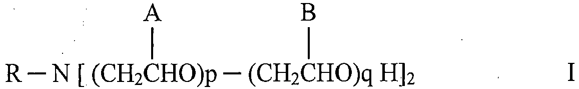 wherein p is 2-3 and q is 4-6.

3. A composition according to claim 1, comprising an alkoxylated fatty amine having the formula 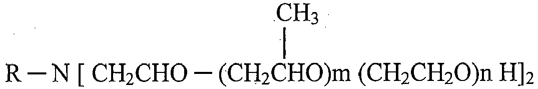 wherein m is 2-3 and n is 2-6.

4. A composition according to claim 2, comprising an alkoxylated fatty amine having the formula 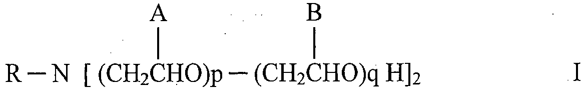 wherein one of A and B is hydrogen and the other is methyl, and wherein the ethylene oxide and propylene oxide groups are random or in blocks.

5. The composition of any one of the preceding claims, wherein p:q is between 50:50 and 20:80.

6. The composition of any one of the preceding claims, wherein p:q is between 56:44 and 29:71.

7. The composition of any one of the preceding claims wherein p is 5.0 to 9.5 and q is 12.0 to 7.5.

8. The composition of any one of the preceding claims, wherein p is 5.0 and q is 12.0.

9. The composition of any one of the preceding claims, wherein R is the hydrocarbon group of tallow amine.

10. A process for controlling insect populations of crops, said insect populations located within tissue structures of said crops, which comprises applying to the exterior foliage of said crops an insecticide composition of any one of the claims 1 to 9.

11. The use of the insecticide composition of anyone of the claims 1 to 9 for controlling insect populations of crops, wherein the insecticide composition is applied to the exterior foliage of the crops.

## Patentansprüche

1. Insektizidzusammensetzung mit mindestens einem insektizid wirksamen Bestandteil ausgewählt aus der Gruppe bestehend aus Chlorfenapyr, Pyrethrinen und den synthetischen Pyrethroiden, Piperonylbutoxid und jeder beliebigen Mischung aus zwei oder mehr von diesen, sowie mit einem oder mehreren alkoxylierten Fettaminen der folgenden Formeln: 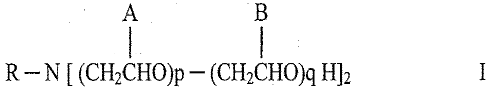 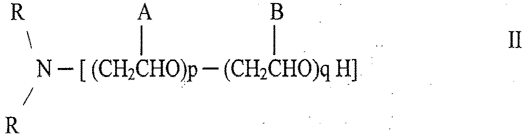 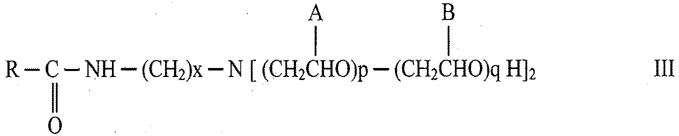 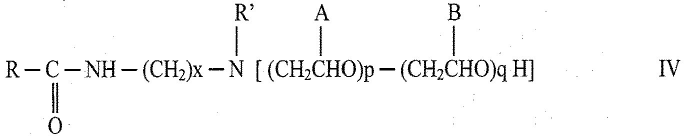 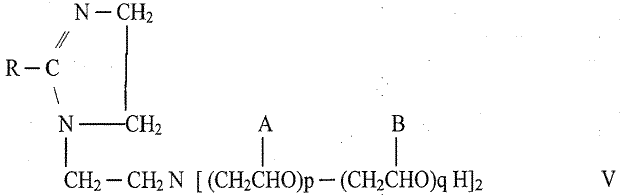 wobei R aus einer aliphatischen Kohlenwasserstoffgruppe mit 8-22 Kohlenstoffatomen besteht, R' aus Wasserstoff oder einer Alkylgruppe mit 2-4 Kohlenstoffatomen besteht, x eine ganze Zahl von 1 bis 6 ist, entweder A oder B aus Wasserstoff besteht und der jeweils andere aus der Gruppe bestehend aus Methyl und Ethyl ausgewählt ist, und wobei die Ethylenoxid- und Propylenoxidgruppen willkürlich oder in Blöcken vorliegen und p und q ganze Zahlen mit einer Summe von 2-50 darstellen.

2. Zusammensetzung nach Anspruch 1, mit einem alkoxylierten Fettamin mit der Formel 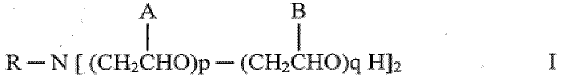 wobei p 2-3 beträgt und q 4-6 beträgt.

3. Zusammensetzung nach Anspruch 1, mit einem alkoxylierten Fettamin mit der Formel 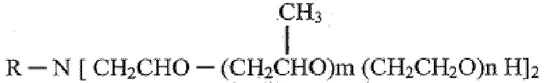 wobei m 2-3 beträgt und n 2-6 beträgt.

4. Zusammensetzung nach Anspruch 2, mit einem alkoxylierten Fettamin mit der Formel 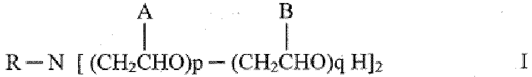 wobei entweder A oder B aus Wasserstoff besteht und der jeweils andere aus Methyl besteht, und wobei die Ethylenoxid- und Propylenoxidgruppen willkürlich oder in Blöcken vorliegen.

5. Zusammensetzung nach einem der vorhergehenden Ansprüche, wobei p:q zwischen 50:50 und 20:80 liegt.

6. Zusammensetzung nach einem der vorhergehenden Ansprüche, wobei p:q zwischen 56:44 und 29:71 liegt.

7. Zusammensetzung nach einem der vorhergehenden Ansprüche, wobei p 5,0 bis 9,5 beträgt und q 12,0 bis 7,5 beträgt.

8. Zusammensetzung nach einem der vorhergehenden Ansprüche, wobei p 5,0 beträgt und q 12,0 beträgt.

9. Zusammensetzung nach einem der vorhergehenden Ansprüche, wobei R die Kohlenwasserstoffgruppe von Talgamin darstellt.

10. Verfahren zur Bekämpfung von Insektenpopulationen von Kulturpflanzen, wobei sich diese Insektenpopulationen in Gewebestrukturen dieser Kulturpflanzen befinden, welches Verfahren das Aufbringen einer Insektizidzusammensetzung nach einem der Ansprüche 1 bis 9 auf die äußeren Blätter der Kulturpflanzen umfasst.

11. Einsatz der Insektizidzusammensetzung nach einem der Ansprüche 1 bis 9 zur Bekämpfung von Insektenpopulationen von Kulturpflanzen, wobei die Insektizidzusammensetzung auf die äußeren Blätter der Kulturpflanzen aufgebracht wird.

## Revendications

1. Composition insecticide comprenant au moins un principe actif à action insecticide choisi dans le groupe constitué du chlorofénapyr, de pyréthrines et des pyréthroïdes synthétiques, du butoxyde de pipéronyle et de tout mélange de deux éléments ou plus de ceux-ci, et une ou plusieurs amine(s) grasse(s) alcoxylée(s) des formules : 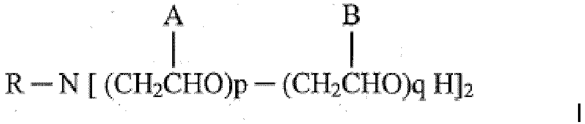 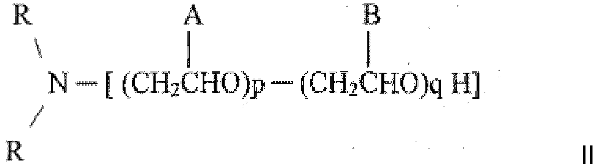 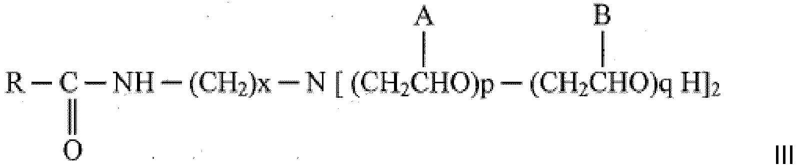 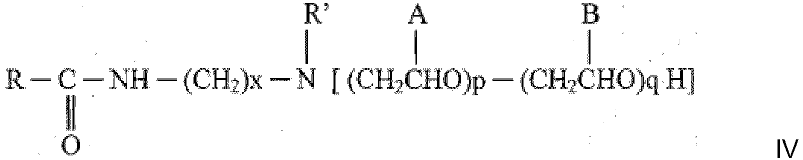 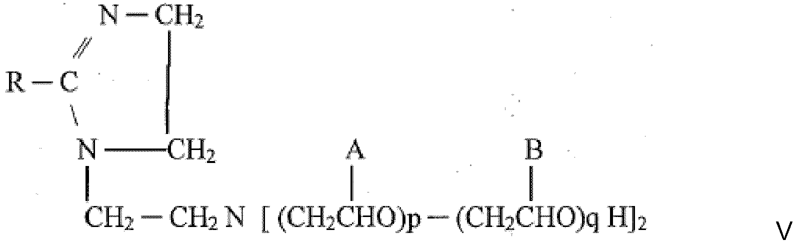 dans lesquelles R représente un groupe hydrocarboné aliphatique ayant 8 à 22 atomes de carbone, R' représente un atome d'hydrogène ou un groupe alkyle ayant 2 à 4 atomes de carbone, x est un nombre entier allant de 1 à 6, l'un de A et de B représente un atome d'hydrogène et l'autre est choisi dans le groupe constitué de méthyle et d'éthyle, et dans lesquelles les groupes oxyde d'éthylène et oxyde de propylène sont aléatoires ou en blocs, et p et q sont des nombres entiers ayant une somme allant de 2 à 50.

2. Composition selon la revendication 1, comprenant une amine grasse alcoxylée ayant la formule 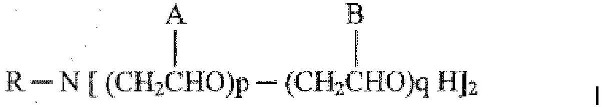 dans laquelle p est compris entre 2 et 3 et q est compris entre 4 et 6.

3. Composition selon la revendication 1, comprenant une amine grasse alcoxylée ayant la formule 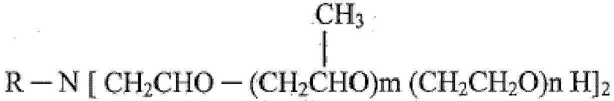 dans laquelle m est compris entre 2 et 3 et n est compris entre 2 et 6.

4. Composition selon la revendication 2, comprenant une amine grasse alcoxylée ayant la formule 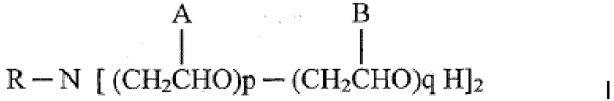 dans laquelle l'un de A et de B représente un atome d'hydrogène et l'autre représente un méthyle, et dans laquelle les groupes oxyde d'éthylène et oxyde de propylène sont aléatoires ou en blocs.

5. Composition de l'une quelconque des revendications précédentes, dans laquelle p : q est compris entre 50 : 50 et 20 : 80.

6. Composition de l'une quelconque des revendications précédentes, dans laquelle p : q est compris entre 56 : 44 et 29 : 71.

7. Composition de l'une quelconque des revendications précédentes, dans laquelle p est compris entre 5,0 et 9,5 et q est compris entre 12,0 et 7,5.

8. Composition de l'une quelconque des revendications précédentes, dans laquelle p est égal à 5,0 et q est égal à 12,0.

9. Composition de l'une quelconque des revendications précédentes, dans laquelle R représente le groupe hydrocarboné de l'amine de suif.

10. Procédé pour lutter contre des populations d'insectes de cultures, lesdites populations d'insectes étant situées dans les structures tissulaires desdites cultures, qui comprend le fait d'appliquer sur le feuillage extérieur desdites cultures une composition insecticide de l'une quelconque des revendications 1 à 9.

11. Utilisation de la composition insecticide de l'une quelconque des revendications 1 à 9 pour lutter contre des populations d'insectes de cultures, dans laquelle la composition insecticide est appliquée sur le feuillage extérieur des cultures.
